# EUROPEAN PATENT SPECIFICATION

(11) **EP 4 220 123 B1**
(45) Date of publication and mention of the grant of the patent: **05.11.2025**
(21) Application number: 22154322.6
(22) Date of filing: 31.01.2022
(51) Int. Cl.: G01N 15/14, G01N 15/1433

(54) **MICROFLUIDIC DEVICE FOR CELL COUNT**
MIKROFLUIDISCHE VORRICHTUNG ZUM ZÄHLEN VON ZELLEN
DISPOSITIF MICROFLUIDIQUE DE COMPTAGE DE CELLULES

(43) Date of publication of application: 02.08.2023
(73) Proprietor: Berner Fachhochschule, 2501 Biel (CH)
(72) Inventor: Bessire, Cédric, 4500 Solothurn (CH)
(74) Representative: P&TS SA (AG, Ltd.)

(56) References cited:
- WO-A2-2007/002480
- US-A1- 2019 056 384

## Description

### Technical domain

The present invention concerns a microfluidic flow-cytometer for measuring fluid biological samples, in particular blood samples.

### Related art

Blood cell measurements are commonly performed in medical diagnoses to assess the health status of an individual. The cellular composition of an individual's blood can provide a first indication of a potentially severe illness, such as neoplastic diseases, a disease progression, as well as a potential infection and/or an inflammation.

For diagnostic purposes, white blood cells are of particular interest. A total white blood cell count outside the reference band for healthy individuals hints at a potential infection, inflammation or a disease.

By performing a differential cell count of the different subspecies of white blood cells, i.e. lymphocytes, granulocytes and/or monocytes, the nature of an infection or inflammation may be identified. In the case of bacterial infections, the course of the infection can for example be monitored by measuring the increase and decrease of neutrophile granulocytes, which are a major group of granulocytes.

Even though white blood cells are significantly larger than red blood cells and platelets, they are far outnumbered by red blood cells, with typical ratios between white to red blood cells ranging from 1:600 to 1:1000. In unprocessed blood samples, white blood cells are therefore surrounded by red blood cells and may be easily hidden from optical detection. For this reason, blood samples are usually processed to reduce the number of red blood cells and/or platelets in the sample to be analysed. Processing may comprise lysis, filtration and/or centrifugation steps.

Processing is however not amenable to further analysis of the tested blood samples in order to obtain a complete assessment of all cell species. Red blood cells and platelets are usually no longer available for measurements. In addition, processing steps risk to also damage white blood cells. This may affect the result of the count. Damage to the cells may also prevent an optical differentiation of the white blood cells into different subspecies, therefore reducing the diagnostic capacity of the test.

Conventional whole blood flowcytometry relies on a sophisticated filtering and lysing process to separate the three major species blood cells, i.e. white blood cells, red blood cells and platelets from each other prior to counting or diagnostic analysis.

Different approaches are known in the art to streamline these processes and to avoid extensive sample processing prior to providing the sample to a flowcytometer. However, the mixing of liquids and pumping of liquids through different vessels and reservoirs renders know devices complex. Known devices usually require bulky and heavy machines for pumping and mixing different liquids and reagents and are therefore unsuitable for point-of-care application close to the bedside.

WO2010086786 discloses a microfluidic device for full blood count comprising two measurement channels. The device furthermore comprises inlets for lysis agents for selectively lysing different cell types in the different channels, such that a white blood cell count can be performed in the first channel and a haemoglobin count can be performed in the second channel.

WO2018098142 discloses a method for complete blood count measurement based on a device comprising a cartridge with a fluid conduit for receiving the fluid sample, which is connected to one or more chambers configured to mix at least a portion of the sample with one or more reagents to form different sample mixtures. The one or more chambers allow for different treatment of cells contained in different portions of a sample.

US 2019/056384 A1 discloses a test device for imaging assay beads, including: a sample entry port for receiving a biological sample, a sample receiving chamber fluidically connected to the sample entry port and a sample testing conduit fluidically connected to the sample receiving chamber.

**An** aim of the present invention is the provision of a microfluidic flow-cytometer device for that overcomes the shortcomings and limitations of the state of the art.

### Short disclosure of the invention

It is an aim of this invention to provide a microfluidic device which simple and suitable for point-of-care applications. The device should be easy to use. The device should also permit to deliver results within a short time frame.

**It** is another aim of this invention to reduce the amount of required processing of the biological sample prior to its measurement in the microfluidic device.

The microfluidic device should be capable of facilitating a differential cell count without the need of separating cell types by filtration or centrifugation, or by selectively lysing certain cell types.

Preferably, the invention should permit for measurement and /or analysis of the complete cell count of a biological sample. The blood cells should not be damaged by the measurement, such that further analyses of the cells may be performed on the same blood sample after the flowcytometric measurement has been concluded.

According to the invention, one or more of these aims are attained by the object of the attached claims, and especially by the independent claims.

In particular, one or more of these aims are achieved by a microfluidic device for counting and/or analysing cells in a biological sample fluid, comprising a microfluidic chip. The device is a microfluidic flow-cytometer.

The microfluidic chip provides a fluid conduit for receiving the sample fluid. Preferably the fluid conduit receives the sample fluid through an inlet opening. Optionally, the microfluidic device comprises an inlet reservoir for receiving a biological sample fluid. The inlet reservoir is fluidly connected to the fluid conduit.

The fluid conduit comprises different portions along its length, including a staining portion and a detection portion. The staining portion and the detection portion are arranged in sequence such that the sample flows through the staining portion before flowing through the detection portion.

The staining portion comprises a staining agent and/or a labelling agent for staining cells comprised in the biological sample fluid.

The detection portion is configured to enable measurement of the sample fluid contained in the detection portion by optical means, for example by optical microscopy or by optical sensors.

The fluid conduit is preferably a channel in the microfluidic chip. For microscopic assessment, the open top of the channel should be closed by a cover, ideally by a microscopic cover glass. The cover may be covalently bonded to the surface of the microfluidic chip, in order to seal the fluid channel from the top.

The fluid conduit may also be a fluid tube integrated in the body of the microfluidic chip.

The axial flow of the sample fluid through the fluid conduit is driven by a capillary pull force exerted on the sample fluid. For this purpose, the microchip comprises a capillary pump. Preferably the capillary pump has hydrophilic inner surfaces.

The microfluidic device preferably comprises a single fluid conduit. The single fluid conduit preferably has one inlet opening for receiving the sample fluid and exits into the capillary pump.

The capillary pump preferably consists of microstructures, such as tubes or channels with cross-sectional dimensions ranging from 15µm to 250µm. The dimension, shape and arrangement of the microstructures is chosen such as to achieve a desired capillary pressure, respectively pull force exerted on the sample fluid.

The capillary pump is fluidly connected to the fluid conduit. The capillary pump is fully contained in the microchip. In order to pull the sample fluid through the staining portion and the detection portion of the fluid conduit, the capillary pump should be positioned after these portions in flow direction. The capillary pump is arranged in a specified zone of the chip.

The fluid conduit may be fluidly connected to an outlet reservoir into which the biological sample fluid exits after passing through the fluid conduit and the capillary pump.

In preferred embodiments, the cross-sectional dimensions of the fluid conduit give rise to a capillarity within the conduits. The fluid conduit may contribute to the capillary pull force generated by the capillary pump. In this embodiment the sample fluid can be pulled along the length of the conduit by the capillarity of the conduit until it reaches the capillary pump.

Preferably the flow of the sample fluid through the microfluidic device is driven exclusively by capillary force.

The capillarity-driven microfluidic set-up of the device enables image flow cytometry without the need to actively pump the sample fluid through the conduit. This facilitates the handling of the device. It also reduces potential variations on flow velocity of the sample due to variations of an active pumping system.

The capillary pump is a passive pump system without the need for any external pumps or other components. No additional manipulation or energy is therefore required to drive the flow of the sample fluid through the microfluidic device. The integration of the capillary pump in the microfluidic device therefore allows for an extremely simple and user-friendly operation of the device.

Capillary pumps of various complexity and comprising a variety of different structural features are known in the art. The capillary pump may be a simple or an advanced pump. The conduits of the pump may be provided as tree lines in various arrangements. The capillary pump may comprise hexagon-shaped conduits. It may have an asymmetric structure, a symmetric structure, or a combination of both. The pump may comprise so-called "balled" lines or posts. Other types of capillary pumps may also be provided, different combinations of pump architectures are possible. The capillary pump provided in this invention is not particularly limited to any particular type or architecture of the capillary pump.

The capillary pump provides a constant and continuous pull force on the sample fluid, thus minimizing the risk of fluctuations in flow-velocity. A constant flow-velocity improves the reliability of the results, in particular the acquired cell count and/or image data.

Preferably the conduits and the capillary pump are designed such that the capillary force of the capillary system is determinative for the flow velocity of the sample fluid, once the sample fluid has entered the capillary pump.

There may be a difference in flow velocities when the sample is driven by the capillarity of the conduit compared to the sample being driven by the capillary pump. To ensure that as little of the sample volume as possible is measured at the first velocity, the detection portion of the fluid conduit should be arranged closely to the entry point of the fluid into the capillary pump, preferably not more than 20mm, or not more than 10mm from said entry point.

In embodiments in which the cross-sectional dimensions of the fluid conduit do not result in a capillary force, the sample fluid needs to be delivered to the capillary pump along the fluid conduit by other means. Several possibilities are thinkable. The sample liquid may for example be pushed along the fluid conduit by means of a syringe, which is inserted into an inlet opening of the fluid conduit.

The minimal cross-sectional dimension of the fluid conduit is preferably equal to or larger than the average size of the largest cell type expected to be present in the biological sample fluid to be analysed. The minimum cross-sectional is chosen such that the largest cell types expected in a sample can flow unhindered through the channel. The risk of blocking the fluid conduit is therefore reduced. Given that especially larger cell species are sufficiently elastically deformable to squeeze through narrow spaces, the minimal cross-sectional dimension of the fluid conduit may also be up to 35%, or up to 20% smaller than the average size of the largest cell type expected in the sample, provided the channel is wide enough for the cell to extend laterally to compensate for the loss in hight. The minimum cross-sectional dimension of the fluid conduit is preferably its hight.

For the detection and measurement of the cells flowing through the detection section, a low hight is advantageous as it permits better optical imaging. The hight of the fluid conduit may for example range from 10 µm to 50 µm, preferably from 18 µm to 25 µm.

Superposition of cells can also pose problem for larger cells, especially if smaller cells are also comprised in the fluid sample. This is for example the case for blood samples, in which smaller red blood cells or platelets due to their size and their abundance in the blood can flow above and hide white blood cells from detection, if the channel is too high. A low hight results in a reduced amount of fluid above and below the cell in the line of view of the optical detector, thus reducing the likelihood of small cells flowing above cells to be detected. The reduced amount of fluid above the cell also reduces the extent of adverse effects of the fluid on imaging the cells. A low fluid conduit hight permits for better optical focussing in the middle of the channel resulting in well focused images of the cells.

For complete blood samples the hight of the fluid conduit should range from 16 µm to 30 µm, or from 18 µm to 25 µm. Ideally the minimum hight is no more than 20%, preferably no more than 40% larger than the average size of the largest blood cells, which are monocytes. The hight of the channel may also be up to 35%, or up to 20% smaller than the average size of monocytes, since the elasticity of the cells enables them to squeeze through the channel of this hight without blocking it. The size of monocytes averages around 15 µm to 30 µm in diameter.

For optical detection of sample cells, the microfluidic device should at least in part be made of transparent material. At a minimum, the detection zone of the microfluidic device must be transparent in order to facilitate optical measurements of the fluid sample.

Optical measurements may for example comprise measurements on the basis of fluorescent light emission, light scattering, or light absorption.

In addition to being suited for optical measurements, the microfluidic device may also comprise electrodes or an array of electrodes for measuring impedance of the sample fluid. In this embodiment the electrodes or electrode arrays are arranged for contacting the sample fluid in the fluid conduit, and for determining the impedance of the sample fluid flowing past the electrodes. Impedance measurements serve to provide additional information on the cell count in the sample fluid.

Preferably the optional cover of the microfluidic chip is a transparent microscopic cover glass. These cover glasses are commonly used in microscopy and may have a thickness of around 170 µm.

For optical image acquisition the microchip in the detection zone should be optically transparent. Preferably substantially the entire body of the microchip is optically transparent. The fabrication of a microchip with a homogenously transparent body is simpler and more cost efficient than the fabrication of a microchip body with opaque and transparent zones.

The microchip may for example be made of transparent glass. The microchip may also be made of a polymer, such as polydimethylsiloxane also called PDMS, or even a thermoplastic material like for example polymethyl methacrylate also called PMMA.

PDMS is a material, which is widely used in the fabrication of microchips and a preferred material for this invention. PDMS is optically transparent in the visible light range, as well as in the UV and IR ranges. PDMS is inherently hydrophobic.

The staining portion of the fluid conduit has an at least partially hydrophilic surface. The hydrophilic surfaces are preferably provided as a continuous surface along the length of the staining portion. It is also possible, to provide the hydrophilic surface in patches.

If the microchip is made from hydrophobic material, such as PDMS, the surface of the fluid conduit must be treated to render it hydrophilic. Several options are possible and known in the art.

The surface of the staining portion may for example chemically treated to render it hydrophilic. Alternatively, an oxygen plasma may be applied to the surface of the microchip, respectively the surface of the fluid conduit to render it hydrophilic. This method is particularly suited for microchip with fluid channels, as it can be easily applied to the entire surface.

It is also possible to coat the inner surface of the fluid conduit with coating layer of hydrophilic material, such as ceramic glass.

In addition, oxygen plasma can be used to covalently bond a cover, for example a microscopic cover glass, with the surface of the microchip in order to seal the top opening of the microfluidic channel.

A staining agent and/or a labelling agent is applied to the hydrophilic surface of the staining portion of the fluid conduit. The staining agent and/or the labelling agent may be coated unto the hydrophilic surface. Preferably the staining agent and/or a labelling agent is disposed over the entire length of the staining portion.

The staining agent and/or a labelling agent is disposed such as to contact the sample fluid while said sample fluid flows through the staining portion.

One or more staining agent and/or a labelling agent can be provided in the staining portion, depending on the cell type and the preferred staining respectively labelling method.

The staining and/or labelling agent diffuses into the sample fluid to stain the cells while they flow through the staining portion. It is therefore important that the cell remain in the staining portion sufficiently long to be stained. The required incubation time of the cells with the agent in the staining portion depends on the specific type of agent and the concentration in which it is provided.

The retention time of the cells in the staining portion is determined by the length of the staining portion and the flow velocity of the sample fluid, which is determined by the capillary pull force. The dimensions and in particular length of the staining portion, and the capillary pump may therefore be chosen to suit a particular staining and/or labelling procedure.

In order to increase the length of the staining portion on the microfluidic chip, this portion may be arranged in a specific space-saving shape, such as in winding serpentines. The arrangement should serve to optimise the ratio between the length of the staining portion to the area of the microfluidic device covered.

Staining or labelling agents, which can be detected under white light conditions may be contained in the staining portion. It is also possible to use fluorescent staining agents, such as for example acridine orange (AO).

For homogenous cell groups one staining agent may be sufficient to visualise, distinguish and count the cells flowing through the detection portion.

For sample fluids comprising heterogenous cells, such as blood, the use of staining agents which can selectively mark different cell species facilitates the classification of the different cells species may be of advantage. Such staining agents interact differently with biological molecules giving rise to a distinct colourisation or a distinct spectrum of emitted light. Different cell species can therefore be distinguished due to their differential staining.

Alternatively, two or more staining agents with different target molecules or staining specificity may be used.

Certain staining agents or labelling agents need facilitator agents to penetrate cell membranes. If these staining or labelling agents are used, the facilitator agents should also be disposed on the surface of the staining portion.

The fluid conduit or parts of the fluid conduit, for example its staining portion, may be coated with an anticoagulant such as EDTA, if the device is intended for measurement of blood samples. The anticoagulant prevents the blood sample form clotting in the fluid conduit. The risk of blocking of the conduits is therefore reduced.

An example for a suitable staining agent to mark and distinguish white blood cells is AO. AO emits green fluorescence when bound to double stranded DNA and red fluorescence when bound to single stranded DNA or RNA. As a result, the AO-stained nucleus of a white blood cell emits green light, while a red fluorescence can be detected for the cytoplasma.

Due to their different morphology and the different intensity and distribution of the AO stain in lymphocytes, monocytes and granulocytes, these AO-stained cells can be readily identified and categorised based on their fluorescent emissions. It is also possible to further subcategorise white blood cells based on their AO staining.

In contrast to white blood cells, red blood cells do not contain nuclei. Despite their high concentration in the blood, red blood cells are therefore near invisible to fluorescence measurements of AO-stained blood samples. It is therefore not necessary to destroy, filter out or lyse red blood cells in the blood sample in order to measure white blood cells. The red blood cells in the sample do not significantly interfere with the detection of the fluorescent light emitted by the stained white blood cells. This offers the distinct advantage, that no processing step to reduce the number of red blood cells in the sample is required for investigating a blood sample using the microfluidic device.

In the case of blood sample this means that even though not detected in the AO-stained blood sample, red blood cells of the sample measured in the microfluidic device can subsequently be measured in an additional step. For this purpose, the blood sample may be collected after exiting the capillary pump of the device.

This additional measuring step may be an optical detection using for example absorption microscopy.

The fluid conduit may comprise more than one detection portion. The detection portions are preferably arranged in sequence on the microfluidic chip and may each be contained in a separate detection zone. Different detection portions may be destined for different optical measurements and/or image acquisition.

For analysis of a blood sample, one detection portion, preferably the portion following the staining portion, may for example be used to determine fluorescence of AO-stained white blood cells, while a second detection portion may be used to detect red blood cells based on transmitted light microscopy for absorption analysis

It is also possible to capture the sample fluid which exits the fluid conduits, respectively the capillary pump of the microchip and to use the blood for further investigation. An extensive analysis can therefore be performed using the same biological sample.

Since processing of the blood sample for application in the claimed device does not require any treatment which damages the cells, a complete analysis of the blood cells in a given sample is possible.

The microfluidic chip comprising a staining portion for staining or labelling sample cells, a detection portion arranged for facilitating measurement of cells and a capillary pump in one chip provides the advantage that the chip is substantially self-contained, in that the staining as well as the generation of continuous flow of the sample trough the conduit of the chip requires no additional manipulation or equipment.

Biological sample fluids, and in particular body sample fluids are preferably provided in unprocessed form to the microfluidic device. Unprocessed means that the sample fluid has not been subjected to chemical treatment, lysis, filtration and/or centrifugation.

Sample fluids, such as whole blood samples, may be diluted. Sample fluids, such as whole blood samples, may also be provided to the microfluidic device in undiluted form.

Blood samples may be diluted, preferably no more than 3-fold, or no more than 2-fold. The blood sample may be diluted in a suitable solution, for example in a physiological solution or in a buffer. The solution of the buffer may comprise an anti-coagulant, such as ethylenediaminetetraacetic aced (EDTA), to prevent clotting of the blood. In addition or alternatively, an anticoagulant may be coated onto the inner surface of at least a portion of the fluid conduit.

Using unprocessed sample fluids provides the advantage, that the morphology of the cells comprised in the sample is maintained. Identification of cell types or cell species can therefore rely on morphology in addition to the staining of the cells, which enhances the reliability of the identification method.

The optical output signal can be detected by an optical microscope. The optical measurement and/or the cell count can be performed by a user of microscope. The measurement and/or cell count can also be performed by an automated system in a detection apparatus. The measurement and/or cell count may be performed using optical sensors.

The fluid conduits width is preferably as large as the field of view of the used image capturing system, which may for example be a microscope or an optical sensor comprised in a detection apparatus.

The width of the fluid conduit may be constant along the entire length, or substantially the entire length of the conduit. The width of the inlet opening may differ from the width of the rest of the conduit.

The optical detection apparatus preferably has enough digital or optical image resolution to permit capturing of at least sufficient pixels per cell, preferably no less than 50 pixels per cell, or no less than 100 pixels per cell, such as to permit for a identification and categorisation of the cells. The field of view therefore depends on the optical imaging system, respectively on the components of the system, used.

The width of the fluid conduit may range from 50µm to 500µm, or from 200µm to 300µm, preferably 250 µm. A width from 240µm to 260µm is particularly suited for 40 fold optical magnification modus using an optical microscope.

This invention furthermore concerns a microfluidic system comprising the microfluidic device and an image acquisition apparatus. The apparatus comprises an optical microscope suitable for detecting fluorescent light, scattered light, and/or light absorption. The apparatus may also comprise one or more optical sensors.

The apparatus furthermore comprises a camera configured to image at least a part of the cells in the detection portion of the fluid conduit. The camera is preferably a configured to record a sequence of images, such as a video.

During measurement the microfluidic device is positioned in the apparatus such that images or a video of the one or more detection zone of the device can be acquired.

The microfluidic system may be configured to perform a cell count of the sample fluid applied to the device. The system may furthermore be configured to detect and distinguish different cell species based on their staining, staining pattern and/or their morphology.

Preferably the microfluidic system further comprises a processor configured to conduct a quantitative and /or qualitative analysis of the cells detected in the acquired images. The acquired image data may also be processed by an external device. The image data may be stored in the apparatus, in an external database, or both.

The interpretation of the image data may be based on predefined parameters. The interpretation of the image data may also be performed by using a trained machine learning algorithm. The algorithm may be configured to classify different types or species of cells according to their morphology and/or staining.

The system therefore allows for a quantitative and qualitative evaluation of cells comprised in a biological sample fluid.

The microfluidic device and microfluidic system are suitable for measurement for a wide range of biological sample fluids comprising suspended cells. As mentioned above, the device and system may be used for measurement of whole blood samples. The device and system may also be used for measurement of other body fluids, such as saliva or semen. Freshly drawn sample fluids as well as stored sample fluids can be provided to the device.

It is also possible to provide a suspension of bacterial cells, for example in a suitable solution, to the microfluidic device. Staining and/or labelling agents may be chosen to suit the cell suspension under investigation.

Preferably, the microfluidic device is not larger than 10 cm², preferably not larger than 5 cm², ideally 4 cm². Its self-contained composition and the fact that no or only minimal sample processing is required render it perfectly suitable as a point-of-care device.

The image acquisition apparatus is preferably a tabletop apparatus.

The microfluidic device may be fabricated as a reusable device. In this embodiment, it is essential to choose a material, which is resilient to cleaning solutions used to clean the fluid conduit of a used device.

In a preferred embodiment, the microfluidic device is fabricated as a disposable device, preferably made of a thermoplastic material, such as PMMA, or of an elastomer such as PDMS.

This invention also concerns a method for analysing of a blood sample using the microfluidic device and/or the microfluidic system. The method may include a classification of the detected cell species into different categories.

### Short description of the drawings

Exemplar embodiments of the invention are disclosed in the description and illustrated by the drawings in which:
**Figure 1** shows a schematic top view of a possible embodiment of a microfluidic chip;
**Figure 2** is a schematic illustration of a lateral view a fluid channel of a microfluidic device for whole blood measurement;
**Figure 3** is a greyscale image of a video taken of an AO-stained blood sample flowing through a 250 µm wide fluid channel;
**Figures 4A-4B** show the classification acridine-orange stained white blood cells of a blood sample provided to the microfluidic device based on fluorescence image acquisition and analysis; and
**Figure 5** shows a scatter-plot of all white blood cells of an acridine-orange stained blood sample detected by fluorescent microscopy and captured in a video of the blood sample flowing through the detection portion.

### Examples of embodiments of the present invention

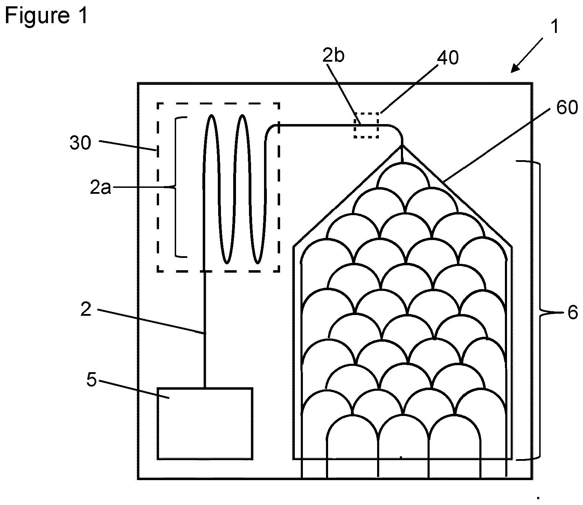

The invention is exemplified with the embodiment depicted in Figure 1, which schematically shows the microfluidic device 1 with a single fluid conduit 2. The fluid conduit has a staining portion 2a arranged in a staining zone 30 which is indicated by dashed lines, and a detection portion 2b arranged in a detection zone 40, also indicated by dashed lines.

The depicted microfluidic chip further comprises a capillary pump 6, arranged in a capillary pump zone 60. The capillary pump shown in Figure 1 is an illustrative, non-limitative example. As mentioned above, the capillary pump may have a different structure.

An inlet reservoir 5, which is a recess or a depression in the upper major surface of the chip and is arranged for the receiving a sample fluid. The inlet reservoir 5 is fluidly connected to the single fluid conduit 2.

The sample fluid received in the inlet reservoir 5 enters the fluid conduit 2. The sample fluid flows through the staining portion 2a and subsequently through the detection portion 2b before entering the capillary pump 6. In the example shown in Figure 1, the sample fluid exits the capillary pump through outlet openings. It may be collected for further analysis or discarded.

In an alternative embodiment, the sample fluid is collected in an outlet reservoir, which is a recess or a depression in the major upper surface of the chip. The outlet reservoir is suitable for receiving the volume of fluid sample filled into the inlet reservoir.

The microfluidic device depicted herein is microfluidic chip with an open fluid channel 2, which was sealed by a covalently bonded microscopic cover glass (not shown) covering the main portion of the upper surface of the chip as described below. The cover glass does not cover, or only partially covers the inlet reservoir and the outlet reservoir. It may have the surface area ranging from 2.25 cm² to 25 cm², for example a square area of 2 cm by 2cm.

A microfluidic devices as presented in Figure 1 can for example be used for measuring white blood cells in samples of human blood.

The microfluidic chip may be made of glass, or a composite such as PDMS or PMMA. Preferably the chip is made of a transparent material.

The surface structure of a composite chip, in particular the microfluidic channel and the capillary pump, may be prepared by generating a thermoset resin mould, for example an epoxy-based mould, such as a photo-resist (SU-8) mould. The mould may be structured by UV-lithography.

If the microfluidic chip is made from a thermoplastic material such as PMMA, it may be produced by injection-moulding.

The resin mould may be spin-coated to a desired thickness. This thickness defines the hight of the fluid channel in the finished polymer microchip. For chips configured for analysis of a blood samples, the thickness, respectively hight, may be chosen to be between 16 µm to 30 µm such as to ensure that all species of white blood cells can flow through the channel without blocking it.

This width of the channel may be optimized for fitting into the field of view of an optical microscope. For a 40-fold magnification mode, a width of 240 µm to 260 µm, preferably 250µm is suitable.

The thickness, respectively hight should be kept as low as possible, in order to ensure that an optical focus point for microscopic assessment may be set within the channel such as to enhance the quality and resolution of the acquired images of the cells flowing through the detection portion 4.

Following an UV-exposure step the thermoset resin is cured. For additional hardening of the mould, the resin may be hard-baked at 200 °C. Hardening enhances the durability of the mould, which is therefore better suited for multiple uses.

For producing the microfluidic chip, PDMS is poured onto the hardened resin-mould. The PDMS should be degassed in vacuum for several minutes. Preferably, the chip is subsequently hardened in a baking step at, for example at 150 °C for about 2 hours.

After baking PDMS can be peeled off the mould and cut to size into one or more single microfluidic chips.

The above-described method is an example for fabricating the microfluidic device of this invention. The invention is however not limited to this example. Other suitable materials may be used for fabricating the microchip. Methods for fabricating microfluidic microchips are known in the art and the invention is not limited to any particular method.

In order to render the surface of the microchip, and in particular the surface of the staining portion hydrophilic, an oxygen plasma treatment may be applied.

Once the surface of the staining portion has been rendered hydrophilic, it may be coated with water-soluble staining agents or labelling agents suitable for marking biological cells.

It is however also possible to subject the surface of the channel to chemical treatment, for example wit polyethylene oxide (PEO) or polyethylenglycol (PEG), to make it hydrophilic. Such chemical treatments are known in the art and not described here. Different from oxygen plasma treatment, chemical treatments generally give rise to permanent hydrophilic surfaces.

In another embodiment, the inner surface of the fluid conduit may also be provided with a coating layer of hydrophilic material, such as ceramic glass, for example SiO₂, or Al₃O₂. The thickness of a coating layer ranges preferably from 30 nm to 100 nm.

Once the inner surface of at least a part of the staining portion has been made hydrophilic, a coating comprising the staining or labelling agent can be applied. The coating procedure described below is suitable for a microfluidic device with open fluid channels. The procedure is given as example. Other procedures known in the art may also be suitable. The procedures may be specific to the type of device and/or the staining or labelling agent used. This invention is not particular limited to a specific coating method or to specific staining or labelling agents.

The staining portion of the fluid channel may for example be coated with an aqueous AO staining solution, which optionally also contains EDTA. The solution may for example comprise 20 µg/ml to 120 µg/ml AO. The solution may furthermore comprise from 2 wt% to10 wt% EDTA.

The fluid channel, or preferably the staining portion of the fluid channel may be completely filled with the AO staining solution and then heated to 40°C to 80°C, letting the water evaporate. The AO and the optional EDTA contained in the solution precipitate from the solution and coat the inner surface of the channel.

For staining, the blood cells should remain in the coated staining portion for at least 5 seconds, preferably for 30 ± 5 seconds, before flowing into the detection portion. Preferably, the flow velocity through the staining portion should not be less than 0.1 mm / second.

In order to seal the fluid channel from the top, an oxygen plasma may be applied to covalently bond a microscopic cover glass of 170 µm thickness onto the upper surface of the microfluidic chip.

Covalent bonding of the cover glass to the device is however not absolutely necessary. For example, in microfluidic chips made of PDMS, the cover glass adheres to the surface of the chip by means of Van-der-Waals forces. These weaker forces are sufficient to pull the cover glass tight enough to the PDMS surface, that the fluid channel is sealed, and the capillary pull force can be established.

The microfluidic devices may then be used to analyse whole blood samples. Blood samples may be freshly drawn for example from a fresh finger prick. However, stored blood may also be used.

The volume of the sample fluid may vary depending on the dimensions of the fluid channel. The volume of the provided sample fluid should at a minimum fill the entire volume of the fluid channel and the fluidly connected capillary pump. In devices of the dimensions mentioned-above, volumes in the microlitre range, for example less than 50 µl or less than 10 µl, or less than 2 µl is sufficient.

Prior to applying the sample to the device, the sample may for example be diluted 1:1 with an aqueous EDTA solution. The final EDTA concentration in the diluted blood sample may be 10 µl / ml, which is sufficient to prevent clotting of the blood. Optionally, AO may be added to the solution to enhance the staining effect of the AO-coated staining portion.

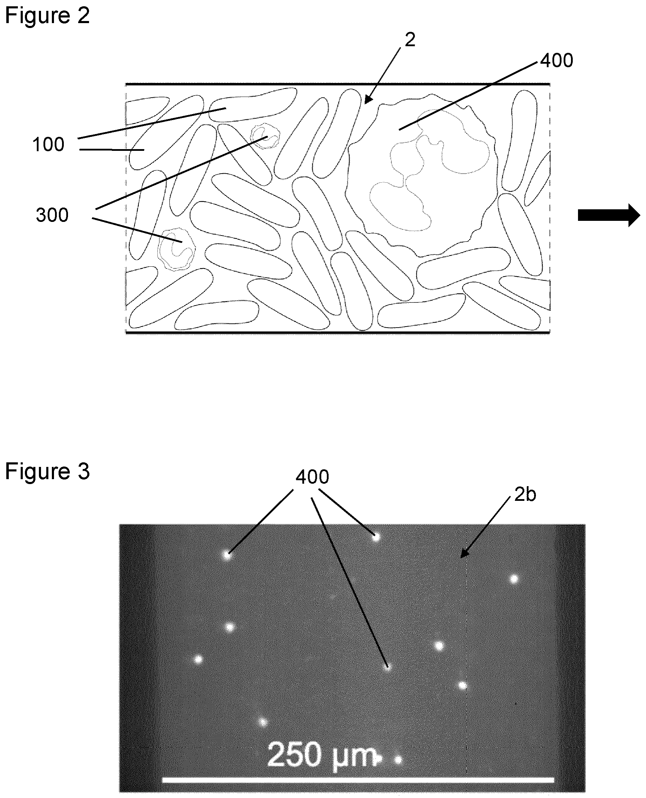

Figure 2 is a schematic representation of a longitudinal section through the detection portion of the fluid channel. Red blood cells 100 and platelets 300 are freely flowing through the channel, while white blood cells 400 just about fit into the hight of the channel. The direction of the flow is indicated with a solid arrow.

The blood sample shown in this illustration represents an AO-stained sample, which is radiated from above the transparent microfluidic chip with light having a wavelength of 480 nm to 490 nm, as indicated with the dashed arrow.

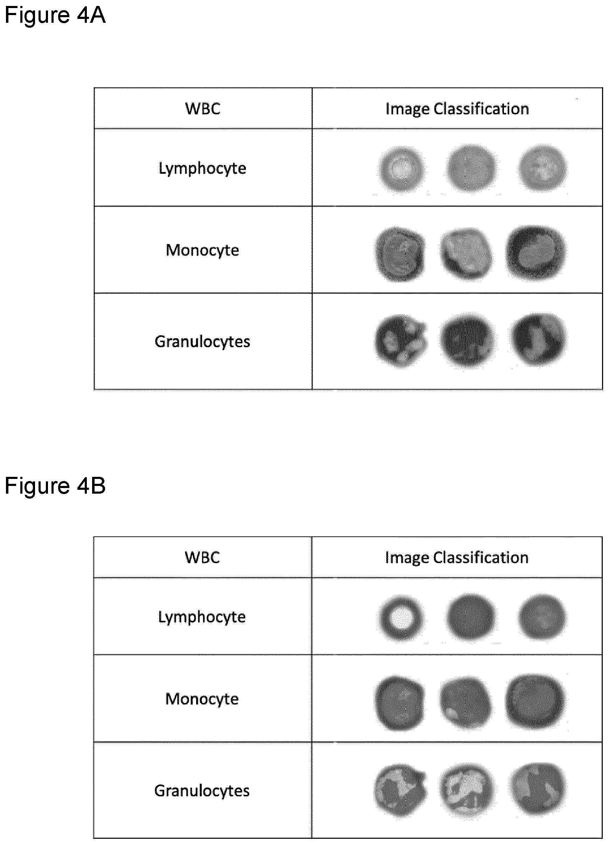

Fluorescence emissions, also indicated as dashed arrows, in the spectrum of AO bound to DNA or to RNA can be detected by fluorescence microscopy. When bound to DNA AO emits fluorescent light in a wavelength λ range peaking at 525 nm. The distinct fluorescent staining, respectively the distinct staining pattern as captured by a camera, can then be used to classify the different species of white blood cells, as is shown in Figure 4. When bound to RNA AO emits fluorescent light in a wavelength λ range peaking at 620 nm.

Figure 3 is a greyscale image of a video taken of an AO-stained blood sample flowing through a 250 µm wide fluid channel. The cells were detected using a fluorescence microscope with a 40-fold magnifying objective and a 0.6 aperture, which captured the 250 µm wide fluid channel fluid channel in its field of view. Only white blood cells are visible in the fluorescent microscope. Platelets and red blood cells, which provide the vast majority of cells in the blood sample, substantially filling the gaps between the imaged white blood cells, are not visible in the acquired images, as they do not or not enough emit fluorescent light.

The cells detected in the recorded images can be digitally magnified to reveal the fluorescent coloration in greater detail, as shown in Figures 4A and 4B. The images shown correspond to a X fold digital magnification of images recorded as described above. According to their staining pattern the captured images of white blood cells WBC were classified into lymphocytes, monocytes and granulocytes.

Figure 4 shows greyscale images of AO-stained white blood cells WBC, in which the colour green is shown as the brightest shade in the greyscale. The images shown in Figure 4B are the same images, with the colour orange shown as the brightest shade in the greyscale. The distribution the differentially stained matter becomes discernible by comparing these images.

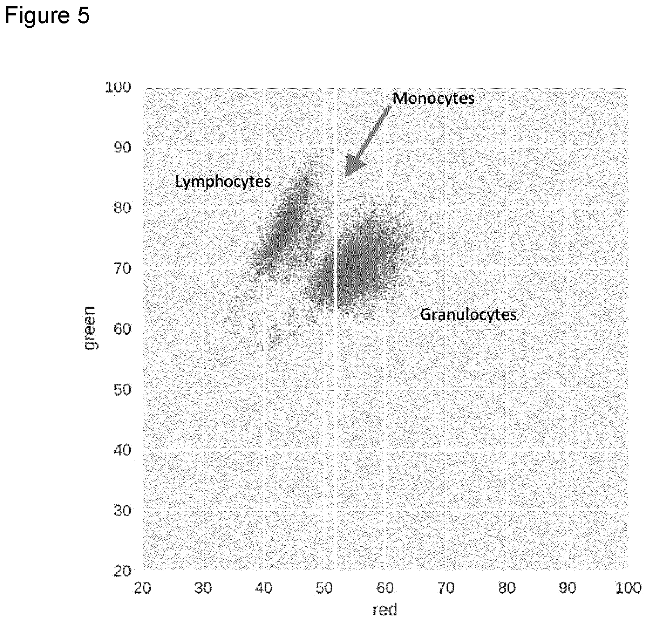

A scatter plot was used to quantify the three different AO-stained species of white blood cells WBC captured in a video according to their total green and red fluorescent light emission. The images of the cells were classified into the three clusters corresponding to lymphocytes, monocytes and granulocytes using Gaussian fitting. A graphical presentation of the scatter plot is shown in Figure 5.

Whilst there has been described in the foregoing description preferred embodiments of the present invention, it will be understood by those skilled in the technology concerned that many variations or modifications in details of design or construction may be made without departing from the present invention as defined in the appended claims.

## Claims

1. A microfluidic device (1) for counting and/or measuring cells in a biological sample fluid, comprising a microfluidic chip with
- a fluid conduit (2) for receiving the sample fluid, the fluid conduit comprising a staining portion (2a) and a detection portion (2b), and
- a capillary pump (6) fluidly connected to said fluid conduit (2) for facilitating axial flow of the sample fluid through the fluid conduit,
wherein said staining portion (2a) of the fluid conduit has an at least partially hydrophilic surface on which a staining agent and/or a labelling agent is disposed for contacting the sample fluid when said sample fluid flows through the staining portion (2a),
wherein said detection portion (2b) is configured to enable measurement of the sample fluid contained in the detection portion by optical detectors, such as an optical microscope or an optical sensor,
wherein the staining portion (2a) and the detection portion (2b) are arranged in sequence such that the sample flows through the staining portion before flowing through the detection portion,
**characterized**
**in that** the fluid conduit (2) exits into the capillary pump (6), said capillary pump (6) consisting of a plurality of fluidly interconnected capillary tubes or capillary channels, and
**in that** the capillary pump is completely contained in the microfluidic chip and arranged in a specified zone.

2. The microfluidic device of claim 1, wherein the flow of the sample fluid through the microfluidic device is driven exclusively by capillary force.

3. The microfluidic device of claim 1 or 2, comprising a single fluid conduit (2).

4. The microfluidic device of any of claims 1 to 3, wherein the inner surface of the fluid conduit is coated with ceramic glass, for example SiO₂, or Al₃O₂.

5. The microfluidic device of any of claims 1 to 4, wherein the fluid conduit (2) is a channel in the microfluidic chip, and wherein the device further comprises a cover glass for sealing the upper opening of the channel, the cover glass being preferably covalently bonded to the microfluidic chip.

6. The microfluidic device of any of claims 1 to 5, which is configured for counting and/or measuring cells in an unprocessed blood sample, which is preferably undiluted, or diluted no more than 3-fold, preferably no more than 2-fold, with a suitable solution, which may comprise an anticoagulant such as Ethylenediaminetetraacetic acid "EDTA".

7. The microfluidic device of any of claims 1 to 6, wherein the minimal cross-sectional dimension of the fluid conduit (2), which is its height, ranges from 10 µm to 50 µm, preferably from 16 µm to 25 µm.

8. The microfluidic device of any of claims 1 to **7,** wherein the staining portion (2a) of the fluid conduit is arranged in a winding shape, for example in a serpentine.

9. The microfluidic device of any of claims 1 to 8, wherein the detection portion (2b) is arranged in a detection zone (40), which is at least partially transparent, such that it is suitable for optical detection of cells comprised in the detection portion, for example by fluorescence microscopy, by light scattering microscopy, by light absorption microscopy, by optical sensors, or by using a combination thereof.

10. The microfluidic device of any of claims 1 to 9, wherein the optical detector is an optical microscope and the width of the fluid conduit in the detection portion is chosen such that it fits into and, preferably, substantially covers the field of view of the microscope in a preferred magnification, for example the conduit may be from 240µm to 260µm, preferably 250 µm, for a 40-fold optical magnification modus of an optical microscope.

11. The microfluidic device of any of claims 1 to 10, wherein the microfluidic devise comprises more than one detection zone (40) each comprising a detection portion (2b) of the fluid conduit, wherein the detection zones are preferably arranged in sequence.

12. The microfluidic device of any of claims 1 to 11, wherein the staining agent is acridine orange (AO) and wherein the detection zone (40) is arranged to facilitate detection of the fluorescent light signal of stained biological material by an external optical detector.

13. A microfluidic analysis system comprising the microfluidic device of one of claims 1 to 12 and an image acquisition apparatus comprising an optical detector configured to detect fluorescence, scattered light, light absorption, or any combination thereof, and a camera configured to image at least a part of the cells in the detection portion of the fluid conduit.

14. The system according to claim 13, further comprising a processor configured to execute a program for conducting a quantitative and/or qualitative analysis of the cells detected in the acquired images and, optionally, to classify the detected cells.

15. A method for performing analysis of a blood sample using the device of any of the claims 1 to 12, or of the system of claims 13 or 14, comprising the following steps
- providing a biological fluid sample to the fluid conduit (2),
- performing one or more optical measurements on one or more portion of the blood sample when said portion is flowing through the detection zone (40) of the device,
- based on the optical measurements performing a quantitative and/or qualitative determination of at least a part of the cells comprised in a volume of the measured fluid sample.

16. The method of claim 15 further comprising the steps of
- classifying the detected cell species according to their staining, or their morphology, or both, into predetermined categories and
- determining the count of cells in each category for a volume of the fluid sample.

## Patentansprüche

1. Mikrofluidische Vorrichtung (1) zum Zählen und/oder Messen von Zellen in einer biologischen Probenflüssigkeit, umfassend einen mikrofluidischen Chip mit
- einer Fluidleitung (2) zur Aufnahme der Probenflüssigkeit, wobei die Fluidleitung einen Färbeabschnitt (2a) und einen Detektionsabschnitt (2b) umfasst, und
- eine Kapillarpumpe, die mit der Fluidleitung (2) strömungstechnisch verbunden ist, um den axialen Fluss der Probenflüssigkeit durch die Fluidleitung zu erleichtern,
wobei der Färbeabschnitt (2a) der Fluidleitung eine zumindest teilweise hydrophile Oberfläche aufweist, auf der ein Färbemittel und/oder ein Markierungsmittel aufgetragen ist, um mit der Probenflüssigkeit in Kontakt zu kommen, wenn die Probenflüssigkeit durch den Färbeabschnitt (2a) fließt,
wobei der Detektionsabschnitt (2b) so konfiguriert ist, dass er die Messung der in dem Detektionsabschnitt enthaltenen Probenflüssigkeit durch optische Detektoren, wie beispielsweise ein optisches Mikroskop oder einen optischen Sensor, ermöglicht,
wobei der Färbeabschnitt (2a) und der Detektionsabschnitt (2b) in einer derartigen Reihenfolge angeordnet sind, dass die Probe durch den Färbeabschnitt fließt, bevor sie durch den Detektionsabschnitt fließt,
**dadurch gekennzeichnet,**
**dass** die Fluidleitung (2) in die Kapillarpumpe (6) mündet, wobei die Kapillarpumpe (6) aus einer Vielzahl strömungstechnisch miteinander gekoppelten Kapillarröhren oder Kapillarkanälen besteht, und
**dass** die Kapillarpumpe vollkommen im mikrofluidischen Chip enthalten und in einem bestimmten Bereich angeordnet ist.

2. Die mikrofluidische Vorrichtung nach Anspruch 1, wobei der Fluss der Probenflüssigkeit durch die mikrofluidische Vorrichtung ausschliesslich durch Kapillarkraft angetrieben wird.

3. Die mikrofluidische Vorrichtung nach Anspruch 1 oder 2, die eine einzige Fluidleitung (2) umfasst.

4. Die mikrofluidische Vorrichtung nach einem der Ansprüche 1 bis 3, wobei die innere Oberfläche der Fluidleitung (2) mit keramischen Glass, zum Beispiel mit SiO₂, oder mir Al₃O₂, beschichtet ist.

5. Die mikrofluidische Vorrichtung nach einem der Ansprüche 1 bis 4, wobei die Fluidleitung (2) ein Kanal in dem mikrofluidischen Chip ist, und wobei die Vorrichtung ferner ein Deckglas zum Verschließen der oberen Öffnung des Kanals umfasst, wobei das Deckglas vorzugsweise kovalent mit dem mikrofluidischen Chip verbunden ist.

6. Die mikrofluidische Vorrichtung nach einem der Ansprüche 1 bis 5, die zum Zählen und/oder Messen von Zellen in einer unverarbeiteten Blutprobe ausgerichtet ist, wobei die Blutprobe vorzugsweise unverdünnt oder nicht mehr als 3-fach, vorzugsweise nicht mehr als 2-fach mit einer geeigneten Lösung verdünnt ist, wobei die geeignete Lösung wahlweise ein Antikoagulans wie zum Beispiel Ethylendiamintetraessigsäure "EDTA" enthält.

7. Die mikrofluidische Vorrichtung nach einem der Ansprüche 1 bis 6, wobei die minimale Querschnittsabmessung der Fluidleitung (2), die vorzugsweise ihre Höhe ist, im Bereich von 10 µm bis 50 µm, vorzugsweise von 16 µm bis 25 µm, liegt.

8. Die mikrofluidische Vorrichtung nach einem der Ansprüche 1 bis 7, wobei der Färbeabschnitt (2a) der Fluidleitung in einer gewundenen Form, beispielsweise in einer Serpentine, angeordnet ist.

9. Die mikrofluidische Vorrichtung nach einem der Ansprüche 1 bis 8, wobei der Detektionsabschnitt (2b) in einer Detektionszone (40) angeordnet ist, die zumindest teilweise transparent ist, so dass sie für die optische Detektion von Zellen, die in dem Detektionsabschnitt enthalten sind, geeignet ist, beispielsweise durch Fluoreszenzmikroskopie, durch Lichtstreuungsmikroskopie, durch Lichtabsorptionsmikroskopie, durch optische Sensoren oder durch Verwendung einer Kombination davon.

10. Die mikrofluidische Vorrichtung nach einem der Ansprüche 1 bis 9, wobei der optische Detektor ein optisches Mikroskop ist und die Breite der Fluidleitung im Detektionsabschnitt so gewählt ist, dass sie in das Sichtfeld des Mikroskops passt und vorzugsweise das Sichtfeld des Mikroskops in einer bevorzugten Vergrößerung im Wesentlichen abdeckt, wobei die Leitung beispielsweise zwischen 240 µm und 260 µm, vorzugsweise 250 µm, für einen 40-fachen optischen Vergrößerungsmodus eines optischen Mikroskops betragen.

11. Die mikrofluidische Vorrichtung nach einem der Ansprüche 1 bis 10, wobei die mikrofluidische Vorrichtung mehr als eine Detektionszone (40) umfassend jeweils einen Detektionsabschnitt (2b) der Fluidleitung aufweist, und wobei die Detektionszonen vorzugsweise hintereinander angeordnet sind.

12. Die mikrofluidische Vorrichtung nach einem der Ansprüche 1 bis 11, wobei das Färbemittel Acridinorange (AO) ist und wobei die Detektionszone (40) so angeordnet ist, um die Detektion des Fluoreszenzlichtsignals des gefärbten biologischen Materials durch einen externen optischen Detektor Zu ermöglichen.

13. Ein mikrofluidisches Analysesystem, das die mikrofluidische Vorrichtung nach einem der Ansprüche 1 bis 12 und eine Bilderfassungsvorrichtung umfasst, die einen optischen Detektor, der so konfiguriert ist, dass er Fluoreszenz, Streulicht, Lichtabsorption oder eine beliebige Kombination davon detektiert, und eine Kamera umfasst, die so konfiguriert ist, dass sie mindestens einen Teil der Zellen in dem Detektionsabschnitt der Fluidleitung abbildet.

14. Das System nach Anspruch 13, wieters einen Prozessor umfassend, der so konfiguriert ist, dass er ein Programm zur Durchführung einer quantitativen und/oder qualitativen Analyse der in den erfassten Bildern nachgewiesenen Zellen ausführt und wahlweise die nachgewiesenen Zellen klassifiziert.

15. Ein Verfahren zur Durchführung einer Analyse einer Blutprobe unter Verwendung der Vorrichtung nach einem der Ansprüche 1 bis 12 oder des Systems nach Anspruch 13 oder 14, die folgenden Schritte umfassend:
- Bereitstellen einer biologischen Flüssigkeitsprobe in der Fluidleitung (2),
- Durchführen einer oder mehrerer optischer Messungen an einem oder mehreren Teilen der Blutprobe, wenn dieser Teil durch die Detektionszone (40) der Vorrichtung fließt,
- Durchführen einer quantitativen und/oder qualitativen Bestimmung von mindestens einem Teil der Zellen, die in einem Volumen der gemessenen Flüssigkeitsprobe enthalten sind, auf der Grundlage der optischen Messungen.

16. Das Verfahren nach Anspruch 15 weiters die folgenden Schritte umfassend:
- Klassifizieren der detektierten Zellarten gemäß ihrer Färbung, oder ihrer Morphologie, oder beidem in vorbestimmte Kategorien, und
- Bestimmen der Anzahl der Zellen in jeder Kategorie für ein Volumen der Flüssigkeitsprobe.

## Revendications

1. Un dispositif microfluidique (1) pour compter et/ou mesurer des cellules dans un échantillon de fluide biologique, comprenant une puce microfluidique avec
- un conduit de fluide (2) pour recevoir l'échantillon de fluide, le conduit de fluide comprenant une partie de coloration (2a) et une partie de détection (2b), et
- une pompe capillaire (6) reliée de manière fluide au-dit conduit de fluide (2) pour faciliter l'écoulement axial de l'échantillon de fluide à travers le conduit de fluide,
dans lequel ladite partie de coloration (2a) du conduit de fluide présente une surface au moins partiellement hydrophile sur laquelle un agent colorant et/ou un agent de marquage est disposé pour entrer en contact avec l'échantillon de fluide lorsque ledit échantillon de fluide s'écoule à travers la partie de coloration (2a),
dans lequel ladite partie de détection (2b) est configurée pour permettre la mesure de l'échantillon de fluide contenu dans la partie de détection par des détecteurs optiques, tels qu'un microscope optique ou un capteur optique,
dans lequel la partie de coloration (2a) et la partie de détection (2b) sont disposées en séquence de telle sorte que l'échantillon s'écoule à travers la partie de coloration avant de s'écouler à travers la partie de détection,
**caractérisé**
**en ce que** le conduit de fluide (2) débouche dans la pompe capillaire (6), ladite pompe capillaire (6) étant constituée d'une pluralité de tubes capillaires ou de canaux capillaires reliés entre eux de manière fluidique, et
**en ce que** la pompe capillaire est entièrement contenue dans la puce microfluidique et disposée dans une zone spécifiée.

2. Le dispositif microfluidique selon la revendication 1, dans lequel l'écoulement de l'échantillon de fluide à travers le dispositif microfluidique est entraîné exclusivement par la force capillaire.

3. Le dispositif microfluidique selon la revendication 1 ou 2, comprenant un seul conduit de fluide (2).

4. Le dispositif microfluidique selon l'une des revendications 1 à 3, dans lequel la surface interne du conduit de fluide est recouvert de verre céramique, par exemple SiO₂, ou Al₃O₂.

5. Le dispositif microfluidique selon l'une des revendications 1 à 4, dans lequel le conduit de fluide (2) est un canal dans la puce microfluidique, et dans lequel le dispositif comprend en outre un verre de protection pour sceller l'ouverture supérieure du canal, le verre de protection étant de préférence lié de manière covalente à la puce microfluidique.

6. Le dispositif microfluidique selon l'une des revendications 1 à 5, qui est configuré pour compter et/ou déterminer la quantité de cellules dans un échantillon de sang non traité, qui est de préférence non dilué, ou dilué au maximum 3 fois, de préférence au maximum 2 fois, avec une solution appropriée, qui peut comprendre un anticoagulant tel que l'acide éthylènediaminetétraacétique « EDTA ».

7. Le dispositif microfluidique selon l'une des revendications 1 à 6, dans lequel la dimension transversale minimale du conduit de fluide (2), qui est sa hauteur, est comprise entre 10 µm et 50 µm, de préférence entre 16 µm et 25 µm.

8. Le dispositif microfluidique selon l'une des revendications 1 à 7, dans lequel la partie de coloration (2a) du conduit de fluide est agencée sous une forme sinueuse, par exemple en serpentin.

9. Le dispositif microfluidique selon l'une des revendications 1 à 8, dans lequel la partie de détection (2b) est disposée dans une zone de détection (40) qui est au moins partiellement transparente, de telle sorte qu'elle convient à la détection optique des cellules comprises dans la partie de détection, par exemple par microscopie à fluorescence, par microscopie à diffusion de lumière, par microscopie à absorption de lumière, par capteurs optiques, ou en utilisant une combinaison de ceux-ci.

10. Le dispositif microfluidique selon l'une des revendications 1 à 9, dans lequel le détecteur optique est un microscope optique et la largeur du conduit de fluide dans la partie de détection est choisie de manière à s'adapter et, de préférence, à couvrir sensiblement le champ de vision du microscope à un grossissement préféré, par exemple le conduit peut avoir une largeur comprise entre 240 µm et 260 µm, de préférence 250 µm, pour un mode de grossissement optique de 40 fois d'un microscope optique.

11. Le dispositif microfluidique selon l'une des revendications 1 à 10, dans lequel le dispositif microfluidique comprend plus d'une zone de détection (40), chacune comprenant une partie de détection (2b) du conduit de fluide, dans lequel les zones de détection sont de préférence disposées en séquence.

12. Le dispositif microfluidique selon l'une des revendications 1 à 11, dans lequel l'agent colorant est l'orange d'acridine (OA) et dans lequel la zone de détection (40) est agencée pour faciliter la détection du signal lumineux fluorescent du matériau biologique coloré par un détecteur optique externe.

13. Un système d'analyse microfluidique comprenant le dispositif microfluidique selon l'une des revendications 1 à 12 et un appareil d'acquisition d'images comprenant un détecteur optique configuré pour détecter la fluorescence, la lumière diffusée, l'absorption de lumière ou toute combinaison de celles-ci, et une caméra configurée pour former une image d'au moins une partie des cellules dans la partie de détection du conduit de fluide.

14. Le système selon la revendication 13, comprenant en outre un processeur configuré pour exécuter un programme destiné à effectuer une analyse quantitative et/ou qualitative des cellules détectées dans les images acquises et, facultativement, à classer les cellules détectées.

15. Un procédé d'analyse d'un échantillon de sang à l'aide du dispositif de l'une des revendications 1 à 12, ou du système des revendications 13 ou 14, comprenant les étapes suivantes
- fournir un échantillon de fluide biologique au conduit de fluide (2),
- effectuer une ou plusieurs mesures optiques sur une ou plusieurs parties de l'échantillon de sang lorsque ladite partie traverse la zone de détection (40) du dispositif,
- sur la base des mesures optiques, effectuer une détermination quantitative et/ou qualitative d'au moins une partie des cellules comprises dans un volume de l'échantillon de fluide mesuré.

16. Le procédé selon la revendication 15 comprenant en outre les étapes consistant à
- classer les espèces cellulaires détectées en fonction de leur coloration, de leur morphologie, ou des deux, en catégories prédéterminées et
- déterminer le nombre de cellules dans chaque catégorie pour un volume de l'échantillon de liquide.
